# EUROPEAN PATENT APPLICATION

(11) **EP 2 138 947 A1**
(43) Date of publication of application: **30.12.2009**
(21) Application number: 08009900.5
(22) Date of filing: 30.05.2008
(51) Int. Cl.: G06F 21/20

(54) **Service interface server**

(71) Applicant: Koninklijke KPN N.V., 2516 CK The Hague (NL)
(72) Inventor: Van Steenbergen, Ate Sander, 9737 NN Groningen (NL); Stolk, Hendrik, Alexander, 2652 EV Berkel En Rodenrijs (NL)
(74) Representative: Wuyts, Koenraad Maria

(57) **Abstract**

The invention relates to a service interface server (SI) being arranged to communicate with at least a first service client and a service provider (SP). The service interface server (SI) is arranged to:
a) receive a first request from a first service client, the request comprising at least a user identification, a service client identification of the first service client and a requested service,
b) verify if the combination of the user identification, the first service client identification and the requested service is allowed using a user authorization database, and if so,
c) retrieve hardware parameters associated with the first service client from a hardware parameter database,
d) generate a switching instruction based on the user identification, the hardware parameters associated with the first service client and the requested service, to provide the requested service to the first service client,
e) send the switching instruction to the service provider SP.

## Description

### TECHNICAL FIELD

The invention relates to a service interface server arranged to communicate with at least a first service client and a service provider. The invention also relates to a method for providing an interface between at least a first service client and a service provider. The invention further relates to a computer program product and a data carrier provided with such a computer program product.

### STATE OF THE ART

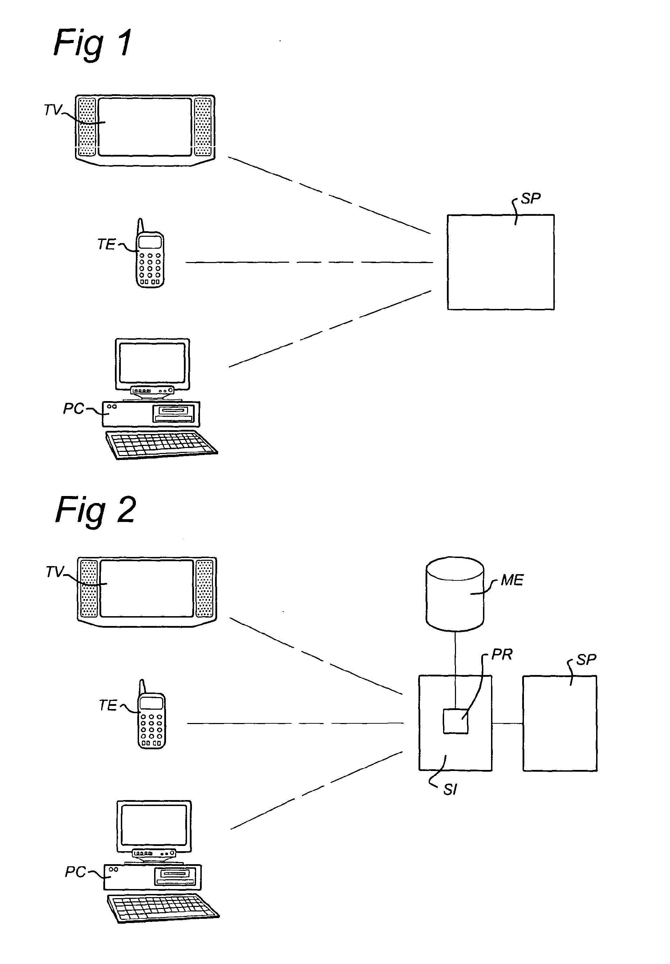

Fig. 1 schematically depicts a number of service clients, such as a television TV, a mobile telephone TE and a computer PC. Each service client may be arranged to communicate with a service provider SP. The service provider SP may be facilitated by a company providing different services, according to this example providing television, telephone and internet services.

Each service client and each service may involve specific communication protocols and communication mediums.

It will be understood that the service clients shown in Fig. 1 are only an example and that other service clients may be used, such as:
- landline telephone (also referred to as main line or fixed-line telephone),
- radio,
- navigation devices,
- car communication systems.

The service provider SP may be arranged to provide services associated with the service clients, such as telephone services for a telephone and television services for a television. Other service may also be provided, such as videotelephones, IP-broadcasted movies, security CAMs, baby phones and the like.

Based on the above it can be understood that a user using the service clients shown in Fig. 1 is confronted with a number of different interfaces when interfacing with the service provider. In many cases, each type of service client has its own interface. However, the user may expect or desire a uniform interface for all the services provided by the service provider. In practise, it is difficult to provide a uniform interface to a user having different service clients as the interface and configuration of a service is often integrated in the service client it self.

Also, based on the above it is clear that it is difficult to establish interaction between different service clients and associated services.

Therefore, it is an object to provide a more uniform interface between service clients and service providers.

### SHORT DESCRIPTION

According to an aspect there is provided a service interface server comprising a processor and memory accessible by the processor, the service interface server being arranged to communicate with at least a first service client and a service provider and the memory comprises a computer program comprising data and instructions arranged to allow said processor to:
a) receive a first request from a first service client, the request comprising at least a user identification, a service client identification of the first service client and a requested service,
b) verify if the combination of the user identification, the first service client identification and the requested service is allowed using a user authorization database, and if so,
c) retrieve hardware parameters associated with the first service client from a hardware parameter database,
d) generate a switching instruction based on the user identification, the hardware parameters associated with the first service client and the requested service, to provide the requested service to the first service client,
e) send the switching instruction to the service provider.

According to a further aspect there is provided a method for providing an interface between at least a first service client and a service provider, the method comprising:
a) receiving a first request from a first service client, the request comprising at least a user identification, a service client identification of the first service client and a requested service,
b) verifying if the combination of the user identification, the first service client identification and the requested service is allowed using a user authorization database, and if so,
c) retrieving hardware parameters associated with the first service client from a hardware parameter database,
d) generating a switching instruction based on the user identification, the hardware parameters associated with the first service client and the requested service, to provide the requested service to the first service client,
e) sending the switching instruction to the service provider.

According to a further aspect there is provided a computer program product comprising data and instructions that can be loaded by a computer arrangement allowing said computer arrangement to perform the method above. According to a further aspect there is provided a data carrier provided with such a computer program product.

### SHORT DESCRIPTION OF THE DRAWINGS

Embodiments will now be described, by way of example only, with reference to the accompanying schematic drawings in which corresponding reference symbols indicate corresponding parts, and in which:
- Figure 1 schematically depicts a number of service clients with associated service provider according to the state of the art,
- Figure 2 schematically depicts a number of service clients with associated service provider according to an embodiment,
- Figure 3 schematically depicts a computer arrangement,
- Figure 4 schematically depicts a flow diagram according to an embodiment.

### DETAILED DESCRIPTION

As described above with reference to Fig. 1, a single user may be faced with different interfaces for services provided with respect to different service clients. Based on Fig. 1 it is also clear that interaction between the different service clients and services is difficult to obtain. For instance, based on Fig. 1 it can be understood that interaction between the television service and the telephone service is technically difficult to achieve as these services are technically separated from each other, for instance use different communication protocols and communication mediums.

In order to overcome at least one of the above mentioned problems, a service interface server SI is provided. The service interface server SI is arranged to form an interface between different service clients TV, TE, PC on the one hand and the service provider SP1 on the other hand. The service interface server SI is a centrai entity that is arranged to store, manage and process the configuration and control of a number of services. The service interface server may be hosted by the service provider SP.

The service interface server SI allows providing a user a uniform interface for different services and possibly different service providers.

It may be a further object to also introduce the possibility to control the output of one service client (for instance a TV) by another service client (for instance a mobile phone). Therefore, the service interface server SI may also allow interaction between different service clients and services, such as controlling a service and gaining access to a service via a service client that is primarily dedicated to a different service. This will be explained in more detail below.

According to an embodiment the service clients TV, TE, PC are arranged to communicate with the service interface server SI via the internet. The service interface server SI may therefore be internet-based or web-based, i.e. may be a web-server which is accessible for a service client TV, TE, PC via the Internet.

For instance, the mobile telephone TE may be arranged to support an IP-connection with the service interface server SI via an UMTS-connection.

The service interface server SI may be arranged to provide a web-based control interface to the service client TV, TE, PC. According to such an embodiment, the service clients are arranged to support internet-browser functionality. Thus, the control of each service runs via a web-page provided by the service interface server SI.

Fig. 2 shows an embodiment of a service interface server SI as positioned in a network, the network comprising service clients, such as television TV, telephone TE, computer PC and service provider SP. Each service client is arranged to communicate with the service interface server SI, for instance using an internet-based communication link. The service interface server SI is arranged to communicate with the service provider, where the service interface server SI may be arranged to use a communication protocol and communication medium associated with the service provider SP.

According to an embodiment, the service interface server SI and the service provider SP may be formed as a single entity. The communication between the service interface server SI and the service provider SP may therefore use a LAN network or an intranet-connection.

### Computer arrangement

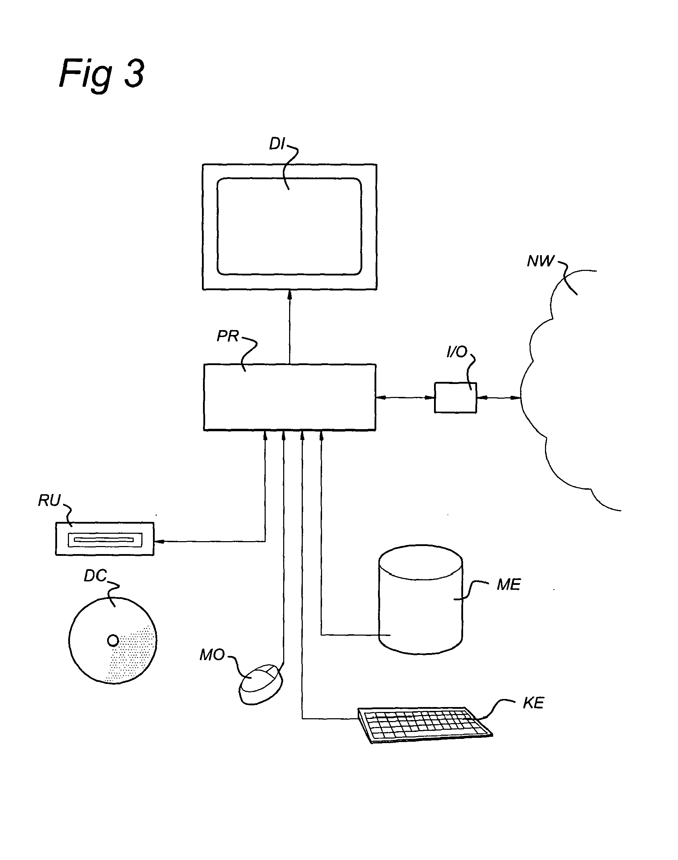

It will be understood that all network points as schematically depicted in Fig. 1, 2 and/or described in the further embodiments, such as the service clients TV, TE, PC, the service interface server SI and the service provider SP may be formed as computer arrangements, an example of which is provided in Fig. 3. Also, some network points that are depicted as separated points may be provided in a single housing, such as the service interface server SI and the service provider SP. Vice versa, some network points that are depicted as a single network point may in fact be formed by a number of cooperating network points.

In Figure 3, an overview is given of a general computer arrangement 10 comprising a processor PR for carrying out arithmetic operations.

The processor PR may be connected to memory ME or may have access to remote memory ME.

The memory ME is shown as a single item, but may be formed by a plurality of memory components, including a hard disk, Read Only Memory (ROM), Electrically Erasable Programmable Read Only Memory (EEPROM), and Random Access Memory (RAM). Not all of these memory types need necessarily be provided. Moreover, these memory components need not be located physically close to the processor ME but may be located remote from the processor PR.

The processor PR may also be connected to means for inputting instructions, data etc. by a user, like a keyboard KE, and a mouse MO. Other input means, such as a touch screen, a track ball and/or a voice converter, known to persons skilled in the art may be provided too.

A reading unit RU connected to the processor PR may be provided. The reading unit RU is arranged to read data from and possibly write data on a data carrier DC like a floppy disk or a CDROM. Other data carriers DC may be tapes, DVD's, CD's, DVD-R's, memory sticks etc. as is known to persons skilled in the art.

The processor PR may also be connected to a printer (not shown) for printing output data on paper, as well as to a display DI, for instance, a monitor or LCD (Liquid Crystal Display) screen, or any other type of display known to persons skilled in the art.

The processor PR may be connected to a loudspeaker (not shown).

The processor PR may be arranged to communicate with remote computer arrangements, via a suitable network NW, for instance via the Public Switched Telephone Network (PSTN), a Local Area Network (LAN), a Wide Area Network (WAN), an IP network etc. or a combination of these by means of I/O means I/O.

The memory ME and/or the data carriers DC may comprise a computer program product in the form of data and instructions arranged to provide the processor PR with the capacity to perform a method in accordance with the embodiments. However, such a computer program product may, alternatively, be downloaded via the network NW.

The processor PR may be implemented as stand alone system, or as a plurality of parallel operating processors each arranged to carry out subtasks of a larger computer program, or as one or more main processors with several sub-processors. Parts of the functionality may even be carried out by remote processors communicating with processor PR through the network NW.

The service interface server SI allows supporting different service clients TV, TE, PC using a browser supporting system. On each service client TV, TE, PC the service interface server SI can provide a log-in facility using a browser, to allow logging in on the service interface server SI. All associated service clients TV, TE, PC can log in on the service interface server SI. The service client TV, TE, PC only needs to support a browser with frames as all communication may be IP based.

A user can log in on the service interface server SI in any suitable way, such as by giving in user identification (possibly in combination with a password). This may be supplemented with a service client identification of the service client that is used for logging in and possibly a requested service, as will be explained later.

The service interface server SI allows the server client to request a service from the service provider SP as will be explained below. The service interface server SI is arranged to receive such a request and evaluate how to proceed with the request.

In order to do so, the service interface server SI manages a user authorization database, comprising combinations of user identifications, service client identifications of service clients and services. For such combinations the service interface server SI has knowledge whether or not such a combination is allowed or not. In case this is unknown for a combination, the service interface server SI may request authorization, as will be explained below.

A user may be part of a group, such as a family group, a sport group (soccer team) etc. A user may be allowed to use services that are allowed to all users that are member of that group. For instance, all members of a family group may be allowed to use the landline telephone of the family house, or, all members of a sport group may be allowed to watch a specific sport pay channel.

Each service that may be requested may involve images (television), speech or sound (television, telephone) and possibly control elements. The control elements may be provided in a uniform way to each associated service client TV, TE, PC by providing a uniform user interface, as will be explained below.

The user interface may for instance comprise sub-menus for different services, allowing easy switching between services, for instance from television to telephone.

So, the configuration and control of a number of services of all associated service clients are now being presented to a user via a single user interface, provided by the service interface server SI. The actual services are in fact "behind" the service interface server SI.

This allows providing users with a uniform user interface for different services and on different service clients TV, TE, PC.

According to an embodiment there is provided a service interface server SI comprising a processor PR and memory ME accessible by the processor PR, the service interface server SI being arranged to communicate with at least a first service client and a service provider SP and the memory ME comprises a computer program comprising data and instructions arranged to allow said processor PR to:
a) receive a first request from a first service client, the request comprising at least a user identification, a service client identification of the first service client and a requested service,
b) verify if the combination of the user identification, the first service client identification and the requested service is allowed using a user authorization database, and if so,
c) retrieve hardware parameters associated with the first service client from a hardware parameter database,
d) generate a switching instruction based on the user identification, the hardware parameters associated with the first service client and the requested service, to provide the requested service to the first service client,
e) send the switching instruction to the service provider SP.

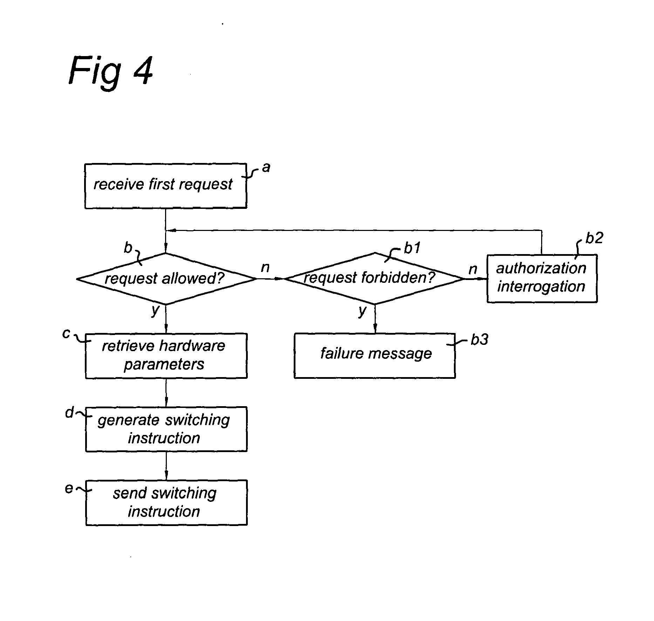

These actions a), b), c), d) and e) are schematically depicted in Fig. 4.

The requested service may be provided by the service provider SP to the first service client by providing a data signal, such as a data streaming feed comprising at least one of images and sound. The interaction between the service interface server SI and the service client, such as providing the actual service, takes place via the service interface server SI.

The first request as received in action a) may for instance comprise a user identification, a service client identification of a television TE, and the requested service may be a request to set up a telephone conversation with a particular third party. The service request may comprise a telephone number associated with the third party.

In action b) the service interface server verifies if the combination of the user identification, the first service client identification and the requested service is allowed by retrieving information from a user authorization database. The user authorization database may be stored in the service interface server SI or at a remote location which is accessible by the service interface server SI.

If the combination is not allowed or unknown, a failure message may be generated and send to the user.

Alternatively, actions b1, b2 and b3 may be performed as shown in Fig. 4 and further described below. Actions b1, b2, b3 comprise sending a failure message when the request is forbidden (action b1 and b3) and performing an authorization interrogation when it is unknown whether the request is allowed or forbidden.

In case the user authorization database comprises no information about whether or not the combination is allowed, this information may be obtained, as will be discussed in more detail below. If the combination is allowed, action c) is performed.

As the request is made from a first service client (television) and the requested service is not necessarily associated with the first service client (telephone service), the service interface server SI can not just forward the request, as the service provider SP has no knowledge about the fact that the first service client is used. Therefore, action c) is performed in which the service interface server SI retrieves hardware parameters associated with the first service client from a hardware parameter database. These hardware parameters can be used to adapt the service provided to the service client actually used. For instance, in case a telephone service is provided using a television TV, the quality parameters of the transmitted sound may be adjusted to the specifications of the television TV. Vice versa, in case a telephone TE is used to request a television service, the resolution of the images may be adjusted (downgraded) to match the display characteristics of the telephone TE and not overload the connection between the telephone TE and the service interface server SI. Also, the sound quality may be adjusted to the speaker characteristics of the telephone TE.

So, according to an embodiment, the requested service is primarily associated with a second service client. The service interface server allows using the first service client for requesting and facilitating a service associated with a second service client. For instance, the service interface server allows making a telephone conversation via a television or vice versa: watch television on a (mobile) telephone.

This allows users to gain access to a service typically associated with the second service client by using the first service client. The first service client is used to access the service interface server, for instance via the Internet, and gain access to the services associated with the second service client SI via the first service client. The interaction of the service client and the service interface server SI may take place via the Internet, but may alternatively take place via any other suitable medium, such as a virtual LAN network.

So, each service client (television set, personal computer,(mobile) telephone, handheld, MP3-player etc.) that is arranged to gain access to the service interface server via for instance the Internet, can be used to gain access to services that are known at the service interface server SI and are associated with the user.

In a next action d) the service interface server SI generates a switching instruction based on the user identification, the hardware parameters associated with the first service client and the requested service, to provide the requested service to the first service client. In action e) this switching instruction is sent to the service provider SP. The service provided SP can now use the switching instruction to provide the service as requested. The service provider SP provides the service to first service client via the service interface server SI.

As already described, the first and second service client may be a television, a computer, a mobile telephone, a landline telephone, a radio. Each hardware type may have its own associated services that now may be used using other service clients.

The hardware parameters may comprise at least one of:
- hardware identification (e.g. a (unique number identifying an unique piece of hardware, for instance a MAC-Address or IP-address DNS-hostname ),
- hardware name (e.g. livingroom TV, Johns Mobile etc. ),
- main service (e.g. television),
- IP-address-PORT-video-out (IP address indicating video output port of first service client)
- IP-address-PORT-sound -out (IP address indicating sound output port of first service client)
- IP-address-PORT-video-in(IP address indicating video input port of first service client)
- IP-address-PORT-sound-in(IP address indicating video input port of first service client)
- Number of pixels width/height (e.g. 600 x 400 pixels),
- sound set-up (sample frequency )

The hardware database may comprise the above hardware parameters, including additional information about each hardware parameter, such as type, restrictions and possible further remarks.

As explained above, the hardware parameters are needed to generate an appropriate switching instruction. For instance, when a television service is requested from and for a mobile telephone, the resolution of the provided television images may be chosen to match the resolution of the display of the mobile telephone.

According to an embodiment, the service interface server is arranged to provide a user interface to each of the plurality of service clients, allowing a user of the service clients to generate the first request. The at least first and second service clients all communicate with one and the same service interface server. In order to facilitate this communication, the service interface server may provide a user interface on each of the service clients to allow a user to generate the first request. The service interface server may for instance comprise a control interface and a content interface.

The control interface may provide a user with a number of questions and options to choose from via the user interface. The service interface server may for instance ask the user to input a user identification. Next, the service interface server may ask the user to select a requested service, for instance a telephone call, a television signal or a web-address. The service client identification may be selected automatically or manually using user interaction.

The content interface may be used to display content such as images and sound, together forming a service.

The user interface may be a web-based user interface. This is an easy-to-implement way of providing a user interface. Also, nowadays, most service clients are suited for supporting web-based interaction. For instance, the control interface may be supported by a first web-browser window, while the content interface may be supported by a second web-browser window.

The service interface server may be arranged to refresh the user interface when performing action a). For instance, the user interface may display a number of virtual buttons, showing a number of services that can be requested, such as a number of different television channels. Once a television channel is selected (i.e. the first request is received), the user interface may be refreshed and may for instance show the same user interface with the virtual button associated with the selected service as a darkened button, providing the user feedback about the selection.

In fact, it will be understood that the control interface may be arranged to guide a user through a number of pages in which the user can subsequently input all relevant data for generating the request, such as the user identification, the service client identification of the first service client and the requested service. After each input, the user interface may be refreshed.

As described above, action b) comprises verifying if the combination of the user identification, the first service client identification and the requested service is allowed using a user authorization database. This authorization database may for a plurality of combinations of user identifications, service client identifications and services comprise an associated authorization flag, the authorization flag may have one of the following values: allowed, forbidden or unknown.

If the authorization flag is "allowed", the service may be provided according to the first request. So, according to Fig. 4 this means that in action b) it is determined that the combination according to the second request is allowed and action c) may be executed. It the request is not allowed (authorization flag is not equal to "allowed") action b1 is performed.

If the authorization flag is "forbidden", the service may not be provided according to the first request. This may for instance be the case when a certain user makes a request for a certain service he/she is not allowed to, such as for instance a child requesting television service by mobile telephone.

So, according to Fig. 4 this means that in action b1) it is determined that the combination according to the first request is not allowed and a deny message may be send to the first service client the first request was received from in action b3.

As a third option, the authorization flag may be "unknown". This means that no information about the requested combination of the user identification, the service client identification of the first service client and the requested service is known at the service interface server SI. In response, the service interface server SI may perform an authorization interrogation in action b2 to determine if the authorization flag should be "allowed" or "forbidden".

The authorization interrogation may be between the service interface server SI and the first service client the request was received from. However, the authorization interrogation may also be performed between the service interface server SI and an authorisation user. The authorization interrogation may be performed via a user interface provided by the service interface server SI.

For instance, in case a user (child) requests a television service via a mobile telephone and the authorisation flag for this request is "unknown", an authorization interrogation may be set up with the authorisation user (parents) to verify if the service interface server SI may allow the request.

After performing the authorization request, the service interface server SI may return to action b).

So, according to an embodiment there is provided a service interface server SI, wherein the user authorization database comprises for combinations of user identifications, service client identifications and services, an associated authorisation user identification, where in case the authorization flag has the value unknown, action b) may further comprise action b2), action b2) comprising
- sending an authorization request to the associated authorisation user,
- receiving an authorization reply based on which the authorization flag is set to allowed or forbidden. The authorisation user may be the same as the user the first request was received from. By doing this, service groups may be created for a specific service, the service groups comprising the associated authorisation user and the users having the particular authorisation user as associated authorisation user for that specific service. This may be useful in situations wherein parents want to control the services used by their children and want to control which services are accessible by their children using which service clients. In this case, the service group is a family.

According to an alternative a service group may be a soccer team that shares a service (such as a specific sports channel). In this case, also an authorization user may be appointed who can control who has access to what service using what kind of service client.

According to an embodiment a service interface server is provided wherein the service interface server SI is further arranged to receive an authorization message, comprising at least one combination of a user identification, a service client identification, a service and an authorization flag to store in the user authorization database. According to this alternative, the authorisation flag does not need to be set using an authorization interrogation as described above, but allows a user to generate and transmit an authorization message to be sent to the service interface server SI to be stored in the authorization database. This is an easy way of filling the authorization database. However, according to an alternative, such an authorization message may only be accepted if originating from an associated authorization user.

Thus, according to an alternative, the user authorization database comprises for combinations of user identifications and services an associated authorization user identification, and the authorization message is only accepted if originating from the authorization user having an authorization user identification associated with the user identification.

According to an alternative, action b) may comprise
- ) in case the first service client identification is unknown in the authorization database, sending a service client identification query to the first service client,
- ) in case the user identification is unknown in the authorization database, sending a user identification query to the first service client.

The queries may be arranged to automatically retrieve the necessary information from the service client, or may be arranged to provide a question to be answered via user interaction by the user. This way, the authorization database can be filled.

In case one of these actions fails, a failure message may be transmitted to the first service client.

The switching instruction as generated in action d) and transmitted in action e) may comprise a combination of the following switching parameters:
ServReqID (unique number identifying the service request generated by the service interface server SI)
ServiceID (unique number identifying a unique service, for instance TV)
SubserviceID (unique number identifying a unique SUBservice, for instance a TV-channel)
UserGroupId (unique number identifying a unique Usergroup, for instance a family or sports team)
UserId (unique number identifying an unique groupmember, for instance a family member or specific member of a sport team)
Timestamp
Action (invite, answer; connect, disconnect etc.)
HWID-From
MainService-From
IP-address-PORT-video-out-From ("From" is the requesting party, i.e. the service client)
IP-address-PORT-sound-out-From
IP-address-PORT-video-in-From
IP-address-PORT-sound-in-From
NumberOfPixselsWidth-From
NumberOtPixselsHeigth-From
SoundSetup-From
HWID-To
MainService-To
IP-address-PORT-video-out-To ("To" is the receiving party, i.e. the service provider SP)
IP-address-PORT-sound-out-To
IP-address-PORT-video-in-To
IP-address-PORT-sound-in-To
NumberOfPixselsWidth-To
NumberOtPixselsHeigth-To
SoundSetup-To
SipAddress-OUT

The switching instruction may comprise a first part for switching images and a second part for switching sound. The switching instruction may be made in accordance with SIP (session initiation protocol), possibly added with IMS (IP Multimedia Subsystem) functionality.

There is also provided a method for providing an interface between at least a first service client and a service provider (SP), the method comprising:
a) receiving a first request from a first service client, the request comprising at least a user identification, a service client identification of the first service client and a requested service,
b) verifying if the combination of the user identification, the first service client identification and the requested service is allowed using a user authorization database, and if so,
c) retrieving hardware parameters associated with the first service client from a hardware parameter database,
d) generating a switching instruction based on the user identification, the hardware parameters associated with the first service client and the requested service, to provide the requested service to the first service client,
e) sending the switching instruction to the service provider SP. This method is depicted in Fig. 4 and described above.

There is further provided a computer program product comprising data and instructions that can be loaded by a computer arrangement, such as a service interface server SI, allowing said computer arrangement to perform the methods according to any one of the embodiments. Also, there is provided a data carrier provided with such a computer program product.

The descriptions above are intended to be illustrative, not limiting. Thus, it will be apparent to one skilled in the art that modifications may be made to the invention as described without departing from the scope of the claims set out below.

## Claims

1. Service interface server (SI) comprising a processor (PR) and memory (ME) accessible by the processor (PR), the service interface server (SI) being arranged to communicate with at least a first service client (TV, TE, PC) and a service provider (SP) and the memory (ME) comprises a computer program comprising data and instructions arranged to allow said processor (PR) to:
a) receive a first request from a first service client (TV, TE, PC), the request comprising at least a user identification, a service client identification of the first service client and a requested service,
b) verify if the combination of the user identification, the first service client identification and the requested service is allowed using a user authorization database, and if so,
c) retrieve hardware parameters associated with the first service client from a hardware parameter database,
d) generate a switching instruction based on the user identification, the hardware parameters associated with the first service client (TV, TE, PC) and the requested service, to provide the requested service to the first service client (TV, TE, PC),
e) send the switching instruction to the service provider SP.

2. Service interface server (SI) according to claim 1, wherein the requested service is primarily associated with a second service client (TV, TE, PC).

3. Service interface server (SI) according to any one of the preceding claims, wherein the hardware parameter comprises at least one of:
- hardware identification,
- hardware name,
- main service,
- IP-address-PORT-video-out,
- IP-address-PORT-sound -out,
- IP-address-PORT-video-in,
- IP-address-PORT-sound-in,
- Number of pixels width/height,
- sound set-up.

4. Service interface server (SI) according to any one of the preceding claims, wherein the service interface server (SI) is arranged to provide a user interface to each of the plurality of service clients (TV, TE, PC), allowing a user of the service clients (TV, TE, PC) to generate the first request.

5. Service interface server (SI) according to claim 4, wherein the user interface is a web-based user interface.

6. Service interface server (SI) according any one of the claims 4 - 5, wherein the service interface server (SI) is arranged to refresh the user interface when performing action a).

7. Service interface server (SI) according to any one of the preceding claims, wherein the authorization database comprises an associated authorization flag for a plurality of combinations of user identifications, service client identifications and services, the authorization flag may have one of the following values: allowed, forbidden or unknown.

8. Service interface server according to claim 7, wherein the user authorization database comprises an associated authorisation user identification for combinations of user identifications, service client identifications and services, wherein in case the authorization flag has the value unknown, action b) may further comprise
- sending an authorization request to the associated authorisation user,
- receiving an authorization reply based on which the authorization flag is set to allowed or forbidden.

9. Service interface server (SI) according to any one of the claims 7 - 8, wherein the service interface server (SI) is further arranged to receive an authorization message, comprising at least one combination of a user identification, a service client identification, a service and an authorization flag to store in the user authorization database.

10. Service interface server (SI) according to any one of the claims 7 - 9, wherein the user authorization database comprises an associated authorization user identification for combinations of user identifications and services, and the authorization message is only accepted if originating from the authorization user having an authorization user identification associated with the user identification.

11. Service interface server (SI) according to any one of the preceding claims, wherein action b) comprises
- ) in case the first service client identification is unknown in the authorization database, sending a service client identification query to the first service client,
- ) in case the user identification is unknown in the authorization database, sending a user identification query to the first service client.

12. Method for providing an interface between at least a first service client and a service provider (SP), the method comprising:
a) receiving a first request from a first service client, the request comprising at least a user identification, a service client identification of the first service client and a requested service,
b) verifying if the combination of the user identification, the first service client identification and the requested service is allowed using a user authorization database, and if so,
c) retrieving hardware parameters associated with the first service client from a hardware parameter database,
d) generating a switching instruction based on the user identification, the hardware parameters associated with the first service client and the requested service, to provide the requested service to the first service client,
e) sending the switching instruction to the service provider SP.

13. Computer program product comprising data and instructions that can be loaded by a computer arrangement allowing said computer arrangement to perform the method according to claim 12.

14. Data carrier provided with a computer program product according to claim 14.
